# EUROPÄISCHE PATENTSCHRIFT

(11) **EP 1 690 608 B1**
(45) Veröffentlichungstag und Bekanntmachung des Hinweises auf die Patenterteilung: **09.09.2009**
(21) Anmeldenummer: 06000898.4
(22) Anmeldetag: 17.01.2006
(51) Int. Cl.: B21C 37/08, B23K 33/00, B23K 11/087

(54) **Verfahren und Vorrichtung zur Herstellung von Rohren**
Method and apparatus for the manufacture of pipes
Procédé et dispositif pour la fabrication de tuyaux

(30) Priorität: 11.02.2005 DE 102005006579
(43) Veröffentlichungstag der Anmeldung: 16.08.2006
(73) Patentinhaber: Benteler Automobiltechnik GmbH, 33104 Paderborn (DE)
(72) Erfinder: Streubel, Wolfgang, 32756 Detmold (DE)
(74) Vertreter: Griepenstroh, Jörg

(56) Entgegenhaltungen:
- FR-A- 2 350 154
- GB-A- 1 556 544
- US-A- 1 354 593
- US-A- 1 363 161
- PATENT ABSTRACTS OF JAPAN Bd. 016, Nr. 217 (M-1252), 21. Mai 1992 (1992-05-21) & JP 04 041016 A (NITTO DENKO CORP), 12. Februar 1992 (1992-02-12)
- PATENT ABSTRACTS OF JAPAN Bd. 011, Nr. 157 (M-590), 21. Mai 1987 (1987-05-21) & JP 61 289915 A (SUMITOMO METAL IND LTD), 19. Dezember 1986 (1986-12-19)

## Beschreibung

Die Erfindung betrifft ein Verfahren zur Herstellung von Rohren gemäß den Maßnahmen im Oberbegriff des Patentanspruchs 1 sowie eine Vorrichtung zur Herstellung von Rohren mit den Merkmalen im Oberbegriff des Patentanspruchs 5 ein solches Verfahren und eine solche Vorrichtung sind aus der DD 276 043 A1 bekannt.

Aus der FR-A-2 350 154 ist ein Verfahren zur Herstellung eines rohrförmigen Körpers aus einer Blechplatine bekannt, bei welchem wenigstens eine Längskante der Blechplatine mit Kontaktbuckeln versehen ist, die mittels Widerstandspressschweißen in einem Schweißwerkzeug miteinander verbunden werden. Zum Verschweißen wird der vorgeformte rohrförmige Körper zwischen ein Ober- und ein Untergesenk gelegt, wobei jeweils eine Elektrodenleiste im Obergesenk und eine Elektrodenleiste im Untergesenk angeordnet ist. Die Elektrodenleisten sind elektrisch gegeneinander isoliert, so dass ein durch die Elektrodenleisten fließender Schweißstrom über die Kontaktbuckel fließt und das Verschweißen bewirkt. Die Umformung der Blechplatine zu einem rohrförmigen Halbzeug erfolg außerhalb der Schweißvorrichtung.

Mit der DD 276 043 A1 zählt ein Verfahren sowie eine Vorrichtung zur Herstellung dünnwandiger Rohre zum Stand der Technik. In dieser Veröffentlichung wird aufgezeigt, wie dünnwandige Rohre aus Blechzuschnitten mit möglichst geringer Abweichung des Querschnitts von der Kreisform hergestellt werden, ohne dass zusätzliche Fertigungszeiten beanspruchende Arbeitsgänge vor- oder nachgeschaltet werden müssen. Innerhalb der beanspruchten Vorrichtung werden Blechzuschnitte mittels indirekter Widerstandsüberlappungsschweißung unter Verwendung eines unteren, den Rohrquerschnitt von außen halbkreisförmig umschließenden Formstückes, eines zylindrischen Dorns mit eingearbeiteter Kupferschiene und zwei oberen Formstücken hergestellt.

Hiervon ausgehend liegt der Erfindung die Aufgabe zugrunde, ein Verfahren sowie eine Vorrichtung zur Herstellung von Rohren aus Blechplatinen aufzuzeigen, wobei das Rohr ohne Verwendung eines Dorns innerhalb des Umformwerkzeugs geschweißt werden kann.

Der verfahrensmäßige Teil der Aufgabe wird durch die Merkmale des Patentanspruchs 1 gelöst. Der gegenstandliche Teil der Aufgabe wird durch die Merkmale des Patentanspruchs 5 gelöst.

Im Rahmen des Patentanspruchs 1 ist vorgesehen, dass eine Blechplatine in ein Umformwerkzeug eingelegt und von einem Stempel in eine U-förmige Ausnehmung eines Unterwerkzeugs gepresst, in einem ersten Umformschritt zu einem U-Profil vorgeformt, und anschließend in einem zweiten Umformschritt zwischen einem Oberwerkzeug und einem Unterwerkzeug in einer Umformpresse zu einem Rohrprofil umgeformt wird. Die Blechplatine wird vor dem ersten Umformschritt entlang wenigstens einer ihrer miteinander zu verbindenden Längsflanken mit für ein Widerstandspressschweißverfahren geeigneten Kontaktbuckeln versehen.

Anders als im Stand der Technik werden die Längsbereiche der Blechplatine nicht durch Widerstandsüberlappungsverschweißung miteinander verbunden, sondern durch stirnseitiges Verbinden der Längsflanken im Bereich der Kontaktbuckel. Dadurch, dass die Längsflanken durch den anstehenden Pressdruck gegeneinander gedrückt werden, schmiegt sich die Blechplatine an das Umformwerkzeug. Ein zusätzlicher Dom ist nicht erforderlich, um die zu verschweißenden Bereiche gegeneinander zu pressen. Es muss folglich nach dem Verschweißen kein Dom aus dem Rohr herausgezogen werden, oder das Rohr von dem Dom abgezogen werden. Dadurch lässt sich der Fertigungsprozess beschleunigen.

Durch den an den Kontaktbuckeln anstehenden Pressdruck sowie die im Bereich der Kontaktbuckel entstehende Schweißwärme werden die Längsflanken miteinander verschweißt. Hierzu weist das Oberwerkzeug im Bereich der sich gegenüber liegenden Längsflanken des Rohrprofils gegensätzlich gepolte und gegeneinander elektrisch isolierte Elektrodenleisten auf, über welche unter Aufrechterhaltung einer Presskraft des Oberwerkzeugs und des Unterwerkzeugs ein elektrischer Strom in die sich gegenüber liegenden Längsflanken eingeleitet wird.

Das nach diesem Verfahren hergestellte Erzeugnis ist ein druckdichtes bzw. ein nicht druckdichtes Rohr. Ein auf diese Weise hergestelltes Rohr kann beispielsweise als Instrumententafelträger, als Türaufprallträger oder im Chassisbereich für Achsen zum Einsatz kommen. Grundsätzlich sind auch Anwendungen außerhalb des Automobilbaus denkbar, bei denen es auf die tragende Struktur des Rohrprofils ankommt.

Hinsichtlich der Anordnung der Kontaktbuckel gibt es eine Vielzahl von Variationsmöglichkeiten. Die Kontaktbuckel können an einer oder beiden Längsflanken ausgebildet sein. Sie können zueinander versetzt oder paarweise gegenüberliegend angeordnet sein. Insbesondere bei der zueinander versetzten Anordnung der Kontatkbuckel ergibt sich gewissermaßen eine Verzahnung der Längsflanken. Die Buckelgeometrie bestimmt die Dichtheit oder Undichtigkeit der Rohre.

Selbstverständlich ist es im Rahmen der Erfindung möglich, durch weitere Fertigungsschritte, insbesondere nachfolgende Schweißverfahren, die Längsflanken teilweise oder vollständig miteinander zu verschweißen, wenn lokal höhere Anforderungen an die Festigkeit der Verbindung gestellt werden.

Das vorbeschriebene Verfahren kann mit einer Vorrichtung mit den Merkmalen des Patentanspruchs 5 durchgeführt werden. Die beanspruchte Vorrichtung zur Durchführung des Verfahrens weist ein Oberwerkzeug und ein Unterwerkzeug zum Rohrformen einer zu einem U-Profil vorgeformten Blechplatine auf. Entscheidend ist, dass das Oberwerkzeug eine im Bereich der Längsflanken des zu einem Rohrprofil fertiggeformten U-Profils verlaufende Elektrodenleisten aufweist. Die Elektrodenleisten sind zumindest gegeneinander isoliert und verlaufen parallel zu den Längsflanken des Rohrprofils. Die Elektrodenleisten besitzen dem Außenumfangs des Rohrprofils zugewandte Kontaktflächen zur Einleitung eines Schweißstroms in das Rohrprofil. Die Kontaktflächen sind daher vorzugsweise in ihrer Kontur an den Außenumfang des Rohrprofils angepasst, wobei es möglich ist, dass die Kontaktflächen der Elektrodenleisten Bestandteil einer formgebenden Kontur des Oberwerkzeugs sind. Hierdurch werden Einbrennungen am Außenumfang des Rohrprofils vermieden und die Standzeiten der Elektrodenleisten erhöht.

Grundsätzlich ist es auch möglich, eine Vielzahl von in einer Reihe angeordneten Einzelelektroden vorzusehen, die in ihrer Gesamtheit eine Elektrodenleiste bilden, die lediglich über einzelne Kontaktbereiche und nicht über die gesamte Länge des Rohrprofils mit diesem in Kontakt steht. Elektroden aus Kupfer besitzen regelmäßig eine geringere Verschleißfestigkeit als ein stählernes Umformwerkzeug. Um einen übermäßigen Verschleiß im Bereich der Elektrodenleisten zu vermeiden, kann daher der Kontaktbereich der Elektrodenleiste an dem Außenumfang des Rohrprofils in gleichmäßigen Abständen von dem die Elektrodenleisten tragenden Oberwerkzeug durchbrochen sein. Die Elektrodenleiste kann gewissermaßen kammartig ausgebildet sein, wobei der Rücken des Elektrodenkamms sämtliche im Abstand zueinander angeordnete Elektrodenfinger miteinander verbindet. Die Elektrodenfinger stehen in Kontakt mit dem Außenumfang des Rohrprofils und können mit fortschreitendem Verschleiß kontinuierlich zugeführt werden.

Die Elektrodenleisten können grundsätzlich spiegelsymmetrisch in Bezug auf eine zwischen den zu verschweißenden Längsflanken verlaufende Mittellängsebene konfiguriert sein. Die Elektrodenleisten sind durch eine Isolierschicht von-einander getrennt, welche in einer zwischen den zu verschweißenden Längsflanken verlaufenden Mittellängsebene angeordnet ist.

Die Erfindung wird nachfolgend anhand eines in schematischen Zeichnungen dargestellten Ausführungsbeispiels näher erläutert. Es zeigen:
- Figuren 1a) bis 1d): vier einzelne Verfahrensschritte zur Herstellung eines Rohrs innerhalb eines Umformwerkzeugs;
- Figur 2: in vergrößerter Darstellung ein Detail der Figur 1d);
- Figuren 3a) bis 3c): drei unterschiedliche Ausführungformen von Blechplatinen zur Verwendung in dem beanspruchten Verfahren.

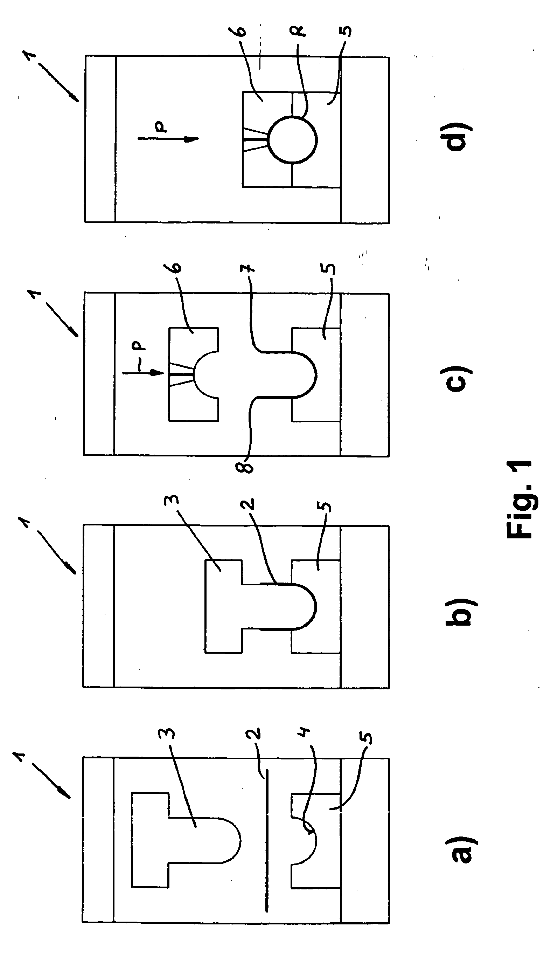

Figur 1 zeigt eine Umformpresse 1, in welcher eine Blechplatine 2 in mehreren aufeinander folgenden Fertigungsschritten zu einem Rohr umgeformt werden soll. Hierzu wird die Blechplatine 2 in ein Umformwerkzeug eingelegt und von einem Stempel 3 in eine U-förmige Ausnehmung 4 eines Unterwerkzeugs 5 gepresst und dadurch in einem ersten Umformschritt zu einem U-Profil vorgeformt (Figur 1b)).

Die zu einem U-Profil vorgeformte Blechplatine 2 wird anschließend durch ein sich in Richtung des Pfeils P bewegendes Oberwerkzeug 6 zu einem Rohrprofil R umgeformt. Hierbei werden die Längsflanken 7, 8 in gegenüberliegender Anordnung gegeneinander gepresst (Figuren 1 c) und d)).

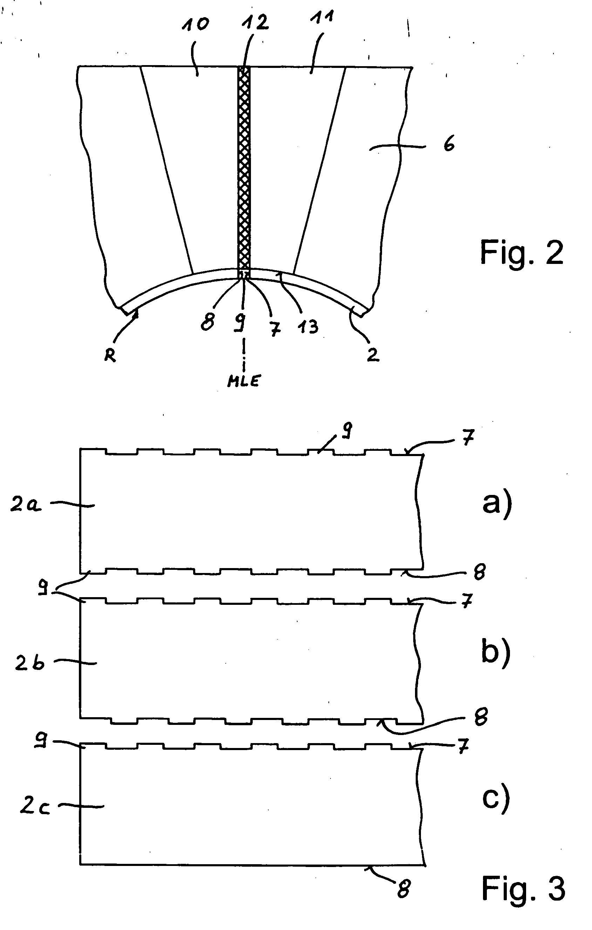

Figur 2 zeigt in vergrößerter Darstellung den Kontaktbereich der Längsflanken 7, 8 der zu einem Rohrprofil R umgeformten Blechplatine 2. Die Längsflanken 7, 8 stoßen unter Eingliederung von Kontaktbuckeln 9 gegeneinander und werden unter Aufrechterhaltung der Presskraft des Oberwerkzeugs 6 miteinander verschweißt. Hierzu wird ein Schweißstrom über Elektrodenleisten 10, 11 in die Längsflanken 7, 8 und dadurch in die Kontaktbuckel 9 eingeleitet. Die Elektrodenleisten 10, 11 sind benachbart den Längsflanken 7, 8 im Oberwerkzeug 6 angeordnet. Sie sind spiegelsymmetrisch in Bezug auf eine zwischen den zu verschweißenden Längsflanken 7, 8 verlaufende Mittellängsebene MLE konfiguriert. In dieser Mittellängsebene MLE verläuft eine Isolierschicht 12, durch welche die Elektrodenleisten 10, 11 elektrisch voneinander getrennt sind.

Die Elektrodenleisten 10, 11 haben Kontaktflächen 13, die in ihrer Kontur an den Außenumfang des Rohrprofils R angepasst und Bestandteil der formgebenden Kontur des Oberwerkzeugs 6 sind.

Der eingeleitete Schweißstrom sucht seinen Weg zur anderen Elektrodenleiste über die Kontaktbuckel 9 zwischen den Längsflanken 7, 8. Dadurch werden diese im Bereich der Kontaktbuckel 9 miteinander verschweißt. Es entsteht je nach Verzahnung der Blechplatinen entweder ein druckdichtes oder druckundichtes Rohr, das nach Entfernung des Oberwerkzeugs 6 aus der Umformpresse 1 entnommen werden kann.

In Figur 3 sind drei mögliche Ausführungsformen von Blechplatinen 2a, 2b, 2c dargestellt. Figur 3a) zeigt eine Blechplatine 2a, bei welcher an jeder ihrer Längsflanken 7, 8 Kontaktbuckel 9 in gegenüberliegender Anordnung vorgesehen sind. Bei der Herstellung des Rohrprofils kontaktieren sich ausschließlich die Kontaktbuckel 9. Im Unterschied hierzu ist bei der Ausführungsform der Figur 3b) vorgesehen, dass die Kontaktbuckel 9 der Blechplatine 2b zueinander versetzt angeordnet sind und bei der Umformung zu einem Rohrprofil gewissermaßen verzahnt ineinander greifen. Auf diese Weise wird jeweils ein Kontaktbuckel 9 mit der jeweils gegenüberliegenden Längsflanke 7, 8 verbunden.

Die Ausführungsform der Figur 3c) sieht nur an einer Längsflanke 7 der Blechplatine 2c Kontaktbuckel 9 vor. Die Geometrie der Kontaktbuckel 9 ist in den Ausführungsbeispielen der Figuren 3a) bis 3c) willkürlich gewählt und dient lediglich zur Veranschaulichung der unterschiedlichen Positionierungsmöglichkeiten der Kontaktbuckel 9. Die Geometrie der Kontaktbuckel 9 sowie deren Anzahl wird grundsätzlich anforderungsgerecht ausgewählt. Insbesondere können die Kontaktbuckel 9 eine wesentlich abweichende Breite oder Höhe aufweisen, sowie in gleichbleibenden als auch unterschiedlichen gegenseitigen Abständen zueinander angeordnet sein.

### Bezugszeichen:

- 1 -: Umformpresse
- 2 -: Blechplatine
- 2a -: Blechplatine
- 2b -: Blechplatine
- 2c -: Blechplatine
- 3 -: Stempel
- 4 -: U-förmige Ausnehmung in 5
- 5 -: Unterwerkzeug
- 6 -: Oberwerkzeug
- 7 -: Längsflanke v. 2, 2a - c
- 8 -: Längsflanke v. 2, 2a - c
- 9 -: Kontaktbuckel
- 10 -: Elektrodenleiste
- 11 -: Elektrodenleiste
- 12 -: Isolierschicht
- 13 -: Kontaktfläche v. 10, 11

- MLE: -Mittellängsebene
- P -: Pfeil
- R -: Rohrprofil

## Patentansprüche

1. Verfahren zur Herstellung von Rohren, bei welchem eine Blechplatine (2, 2a - c) in ein Umformwerkzeug eingelegt und von einem Stempel (3) in eine U-förmige Ausnehmung (4) eines Unterwerkzeugs (5) gepresst und in einem ersten Umformschritt zu einem U-Profil vorgeformt und in einem zweiten Umformschritt zwischen einem zweiten Oberwerkzeug (6) und einem Unterwerkzeug (5) in einer Umformpresse (1) zu einem Rohrprofil (R) umgeformt wird, **dadurch gekennzeichnet, dass** die Blechplatine (2) vor dem ersten Umformschritt entlang wenigstens einer der miteinander zu verbindenden Längsflanken (7, 8) mit für ein Widerstandspressschweißverfahren geeigneten Kontaktbuckeln (9) versehen wird, wobei das zweite Oberwerkzeug (6) im Bereich der sich gegenüberliegenden Längsflanken (7, 8) des Rohrprofils (R) gegensätzlich gepolte und gegeneinander elektrisch isolierte Elektrodenleisten (11, 12) aufweist, über welche unter Aufrechterhaltung einer Presskraft des zweiten Oberwerkzeugs (6) und des Unterwerkzeugs (5) ein elektrischer Strom in die sich gegenüber liegenden Längsflanken (7, 8) eingeleitet wird, wobei die Kontaktbuckel (9) durch den anstehenden Pressdruck und die entstehende Schweißwärme mit der gegenüberliegenden Längsflanke (7, 8) verschweißt werden.

2. Verfahren nach Anspruch 1, **dadurch gekennzeichnet, dass** die Kontaktbuckel (9) an beiden Längsflanken (7, 8) ausgebildet werden.

3. Verfahren nach Anspruch 2, **dadurch gekennzeichnet, dass** die Kontaktbuckel (9) der Längsflanken (7, 8) zueinander versetzt angeordnet werden.

4. Verfahren nach Anspruch 2, **dadurch gekennzeichnet, dass** die Kontaktbuckel (9) der Längsflanken (7,8) paarweise gegenüberliegend angeordnet werden.

5. Vorrichtung zur Herstellung von Rohren mit einem Oberwerkzeug (6) und einem Unterwerkzeug (5) zum Rohrformen einer zu einem U-Profil vorgeformten Blechplatine (2, 2a - c), **dadurch gekennzeichnet, dass** das Oberwerkzeug (6) im Bereich der Längsflanken (7, 8) des zu einem Rohrprofil (R) fertiggeformten U-Profils angeordnete Elektrodenleisten (10, 11) aufweist, die gegeneinander isoliert sind und parallel zu den Längsflanken (7, 8) des Rohrprofils (R) verlaufen, wobei die Elektrodenleisten (10, 11) dem Außenumfang des Rohrprofils (R) zugewandte Kontaktflächen (13) zur Einleitung eines Schweißstroms in das Rohrprofil (R) besitzen.

6. Vorrichtung nach Anspruch 5, **dadurch gekennzeichnet, dass** die Kontur der Kontaktfläche (13) der Elektrodenleisten (10, 11) an den Außenumfang des Rohrprofils (R) angepasst ist.

7. Vorrichtung nach Anspruch 5 oder 6, **dadurch gekennzeichnet, dass** die Kontaktflächen (13) der Elektrodenleisten (10,11) Bestandteil einer formgebenden Kontur des Oberwerkzeugs (6) sind.

8. Vorrichtung nach einem der Ansprüche 5 bis 7, **dadurch gekennzeichnet, dass** die Elektrodenleisten (10, 11) spiegelsymmetrisch in Bezug auf eine zwischen den zu verschweißenden Längsflanken (7,8) verlaufende Mittellängsebene (MLE) konfiguriert sind.

9. Vorrichtung nach einem der Ansprüche 5 bis 8, **dadurch gekennzeichnet, dass** die Elektrodenleisten (10, 11) durch eine Isolierschicht (12) voneinander getrennt sind, welche in einer zwischen den zu verschweißenden Längsflanken (7, 8) verlaufenden Mittellängsebene (MLE) angeordnet ist.

## Claims

1. Method of producing pipes in which a steel sheet blank (2, 2a - c) is placed in a forming tool and pressed by a punch (3) into a U-shaped recess (4) of a lower die (5) and, in a first forming step, is pre-formed into a U-profile and, in a second forming step, is formed into a pipe profile (R) between a second upper die (6) and a lower die (5) in a forming press (1), **characterised in that** the steel sheet blank (2), prior to the first forming step, is provided with contact projections (9), which are suitable for a resistance pressure welding method, along at least one of the longitudinal flanks (7, 8) to be connected with one another, wherein the second upper die (6) has electrode strips (11, 12), which have opposite poles and are electrically insulated from one another, in the region of the opposing longitudinal flanks (7, 8) of the pipe profile (R), via which electrode strips (11, 12), while maintaining a pressure force of the second upper die (6) and the lower die (5), an electric current is introduced into the opposing longitudinal flanks (7, 8), wherein the contact projections (9) are welded by the present mould pressure and the resultant welding heat to the opposing longitudinal flank (7, 8).

2. Method according to Claim 1, **characterised in that** the contact projections (9) are formed on both longitudinal flanks (7, 8).

3. Method according to Claim 2, **characterised in that** the contact projections (9) of the longitudinal flanks (7, 8) are arranged offset to one another.

4. Method according to Claim 2, **characterised in that** the contact projections (9) of the longitudinal flanks (7, 8) are arranged oppositely in pairs.

5. Device for producing pipes with an upper die (6) and a lower die (5) for pipe-forming of a steel sheet blank (2, 2a - c) pre-formed into a U-profile, **characterised in that** the upper die (6) has electrode strips (10, 11) arranged in the region of the longitudinal flanks (7, 8) of the U-profile which is finished into a pipe profile (R), which electrode strips (10, 11) are insulated from one another and run parallel to the longitudinal flanks (7, 8) of the pipe profile (R), wherein the electrode strips (10, 11) possess contact surfaces (13) facing the outer circumference of the pipe profile (R) for introduction of a welding current into the pipe profile (R).

6. Device according to Claim 5, **characterised in that** the contour of the contact surface (13) of the electrode strips (10, 11) is adapted to the outer circumference of the pipe profile (R).

7. Device according to Claim 5 or 6, **characterised in that** the contact surfaces (13) of the electrode strips (10, 11) are an element of a shaping contour of the upper die (6).

8. Device according to one of Claims 5 to 7, **characterised in that** the electrode strips (10, 11) are configured mirror-symmetrically in relation to a central longitudinal plane (MLE) running between the longitudinal flanks (7, 8) to be welded.

9. Device according to one of Claims 5 to 8, **characterised in that** the electrode strips (10, 11) are separated from one another by an insulating layer (12) which is arranged in a central longitudinal plane (MLE) running between the longitudinal flanks (7, 8) to be welded.

## Revendications

1. Procédé pour la fabrication de tubes, dans lequel une plaque de tôle (2, 2a-c) est mise en place dans un outil de mise en forme et est pressée par un poinçon (3) dans un évidement (4) en forme de U d'un outil inférieur (5) et préalablement déformée dans une première passe de mise en forme entre un second outil supérieur (6) et un outil inférieur (5) dans une presse de mise en forme (1) pour donner un profilé tubulaire (R), **caractérisé en ce que** la plaque de tôle (2), avant la première passe de mise en forme, est dotée de bosses de contact (9) appropriées pour un processus de soudage résistif à la presse le long de l'un au moins des flancs longitudinaux (7, 8) à relier l'un à l'autre, dans lequel le second outil supérieur (6) comprend, dans la zone des flancs longitudinaux (7, 8) mutuellement opposés du profilé tubulaire (R), des barrettes électrodes (11, 12) de pôles opposés et isolées électriquement les unes par rapport aux autres, au moyen desquelles on injecte un courant électrique dans les flancs longitudinaux (7, 8) mutuellement opposés tout en maintenant une force de pressage du second outil supérieur (6) et de l'outil inférieur (5), et les bosses de contact (9) sont soudées avec le flan longitudinal opposé (7, 8) sous la pression de pressage résultante.

2. Procédé selon la revendication 1, **caractérisé en ce que** les bosses de contact (9) sont réalisées sur les deux flancs longitudinaux (7, 8).

3. Procédé selon la revendication 2, **caractérisé en ce que** les bosses de contact (9) des flancs longitudinaux (7, 8) sont agencées de façon décalée les unes par rapport aux autres.

4. Procédé selon la revendication 2, **caractérisé en ce que** les bosses de contact (9) des flancs longitudinaux (7, 8) sont agencées de façon opposée par paires.

5. Appareil pour la fabrication de tubes, comprenant un outil supérieur (6) et un outil inférieur (5) pour former des tubes avec une plaque de tôle (2, 2a-c) mise préalablement en forme avec un profil en U, **caractérisé en ce que** l'outil supérieur (6) comprend des barrettes-électrodes (10, 11) agencées dans la zone des flancs longitudinaux (7, 8) du profilé en U mis sous la forme finale d'un profilé tubulaire (R), lesquelles sont isolées les unes par rapport aux autres et s'étendent parallèlement aux flancs longitudinaux (7, 8) du profilé tubulaire (R), dans lequel les barrettes-électrodes (10, 11) possèdent des surfaces de contact (13), tournées vers la périphérie extérieure du profilé tubulaire (R), pour injecter un courant de soudage dans le profilé tubulaire (R).

6. Appareil selon la revendication 5, **caractérisé en ce que** le contour de la surface de contact (13) des barrettes-électrodes (10, 11) est adaptée à la périphérie extérieure du profilé tubulaire (R).

7. Appareil selon la revendication 5 ou 6, **caractérisé en ce que** les surfaces de contact (13) des barrettes-électrodes (10, 11) font partie d'un contour de mise en forme de l'outil supérieur (6).

8. Appareil selon l'une des revendications 5 à 7, **caractérisé en ce que** les barrettes-électrodes (10, 11) sont configurés à symétrie plane par rapport à un plan longitudinal médian (MLE) qui s'étend entre les flancs longitudinaux à souder (7, 8).

9. Appareil selon l'une des revendications 5 à 8, **caractérisé en ce que** les barrettes-électrodes (10, 11) sont séparées les unes des autres par une couche isolante (12), laquelle est agencée dans un plan longitudinal médian (MLE) qui s'étend entre les flancs longitudinaux à souder (7, 8).
